# FASCICULE DE BREVET EUROPEEN

(11) **EP 0 988 787 B1**
(45) Date de publication et mention de la délivrance du brevet: **01.09.2010**
(21) Numéro de dépôt: 99122985.7
(22) Date de dépôt: 12.12.1994
(51) Int. Cl.: A01K 39/012

(54) **Dispositif d'alimentation d'animaux tels que des volailles**
Geflügelfütteranlage
Poultry feeder

(30) Priorité: 17.12.1993 FR 9315529
(43) Date de publication de la demande: 29.03.2000
(62) Demande divisionnaire de: 94460047.7
(73) Titulaire: Le Roy, Nicolas, F-35200 Rennes (FR); Bannier, Anita, F-35200 Rennes (FR); Le Roy, Bruno, F-35200 Rennes (FR)
(72) Inventeur: Le Roy, Nicolas, F-35200 Rennes (FR); Bannier, Anita, F-35200 Rennes (FR); Le Roy, Bruno, F-35200 Rennes (FR)
(74) Mandataire: Larcher, Dominique

(56) Documents cités:
- EP-A- 0 105 571
- FR-A- 2 520 192
- FR-A- 2 669 187
- FR-A- 2 704 386
- GB-A- 1 022 509
- US-A- 3 105 463
- US-A- 3 476 087

## Description

La présente invention concerne un dispositif d'alimentation d'animaux tels que des volailles. Un dispositif selon l'invention est du type gui est prévu pour être approvisionné en aliment par un tube Convoyeur sous lequel il se trouve suspendu et dans lequel les animaux viennent se nourrir.

Les tubes convoyeurs concernés par l'invention sont dénommés généralement "chaînes au sol". En effet, étant suspendues aux charpentes des bâtiments, à l'horizontal, aux moyens de câbles et de poulies, ces chaînes peuvent être relevées ou descendues selon les besoins.

On connaît déjà des dispositifs pour l'alimentation des Volailles. Généralement, ces dispositifs sont prévus pour être approvisionnés par des installations de chaînes d'alimentation et, selon le type, ils sont prévus pour des chaînes dites "chaînes aériennes", ou des chaînes dites "chaînes au sol".

Le mode de distribution d'aliments par "chaînes aériennes" concerne les tubes convoyeurs fixés aux charpentes, ce qui facilite notamment la pose au sol de cloisonnements nécessaires à la séparation des lots de volailles, pendant les premiers jours.

Ainsi, le document de brevet FR-A-2 520 192 décrit un dispositif qui est une mangeoire approvisionnée en nourriture par une "chaîne aérienne" qui conduit la nourriture dans les mangeoires par de longs conduits de descente encombrants et qui nécessitent leur démontage lors des départs de volailles.

L'utilisation des "chaînes au sol" ne présente pas cet inconvénient et ne nécessite que des descentes de faible longueur qui, par une extrémité, sont accrochées aux "chaînes au sol" et qui, par l'autre extrémité, alimentent directement les dispositifs d'alimentation afin d'accompagner ceux-ci dans leurs déplacements verticaux.

L'un des objectifs de l'invention est de prévoir un dispositif pour l'alimentation d'animaux qui soit suspendu à un tube convoyeur de type "chaîne au sol"

Les animaux, selon qu'il s'agit de volailles en bas âge, telles que des poussins ou des dindonneaux ou qu'il s'agit de volailles d'âge adulte telles que des poulets ou des dindes ou dindons, ne mangent pas tous de la même manière et, en particulier, pas à la même hauteur. Alors que les volailles en bas âge picorent dans une assiette posée à même le sol, les dindes et les dindons mangent dans une auge élevée par rapport au sol.

Les éleveurs de volailles, pour assainir leur élevage, alternent les campagnes d'animaux qu'ils élèvent: pendant plusieurs campagnes successives, ils font du poulet, puis, pendant une ou deux campagnes, ils font de la dinde. Les germes de maladie qui peuvent avoir pris naissance durant les premières campagnes sont ainsi éliminés pendant les campagnes d'animaux différents suivantes.

Pour l'éleveur, la technique de l'alternance des animaux pose néanmoins un problème du fait de l'installation qui n'est pas nécessairement la même pour tous les animaux et, notamment, les dispositifs d'alimentation qui, compte tenu des modes d'alimentation différents mentionnés ci-dessus, ne présentent pas la même structure.

Généralement et classiquement, lors d'un changement d'animaux, l'éleveur démonte les mangeoires prévues pour les campagnes du premier type d'animal et installe, à la place, des mangeoires prévues pour le second type. Cette opération s'avére longue et fastidieuse.

Il y a donc un besoin pour un dispositif pour l'alimentation des volailles qui puisse, de par sa structure particulière, être prévu pour tout type de volailles.

Un but de l'invention est donc de proposer un dispositif d'alimentation dont la structure est telle qu'il puisse être utilisé aussi bien pour les animaux qui picorent dans une assiette à même le sol que pour les animaux, tels que les dindes ou dindons, qui mangent dans une auge élevée par rapport au sol.

Ce but est atteint avec un dispositif d'alimentation pour animaux, tels que des volailles, selon la revendication 1.

Ainsi, lorsque le récipient est ouvert sur l'assiette, il déverse l'aliment qu'il contient et qui lui a été fourni par le tube convoyeur dans l'assiette, et les animaux peuvent venir picorer dans l'assiette. Dans ce mode d'utilisation, le dispositif d'alimentation de l'invention est adapté pour les poussins qui mangent proche du sol. Lorsque la trémie a son fond qui est obstrué, elle joue le rôle d'une auge et est donc adaptée aux volailles qui mangent en hauteur, telles que la dinde ou le dindon.

Selon un mode de réalisation particulièrement avantageux, les moyens de réglage de la hauteur d'aliment dans ladite assiette consiste en au moins une fenêtre dans le fond du récipient pouvant être, à volonté, soit ouverte sur le fond de l'assiette soit obstruée par ledit fond, ladite assiette et ledit récipient étant prévus pour pouvoir se déplacer axialement l'un par rapport à l'autre de manière à pouvoir prendre toutes les positions qui sont comprises entre une position dite d'ouverture et une position dite de fermeture, l'intérieur du récipient étant en communication avec l'intérieur de l'assiette dans toutes les positions à l'exception de la position dite de fermeture.

Selon une autre caractéristique importante de l'invention, un dispositif d'alimentation comprend en outre des moyens de réglage de la hauteur d'aliment dans ledit récipient, ledit récipient fonctionnant alors à la manière d'une mangeoire.

De manière avantageuse, lesdits moyens de réglage consistent, d'une part, en une partie centrale creuse qui est pourvue d'un fond et dont l'ouverture supérieure est on communication avec ledit tube d'alimentation, la paroi latérale de ladite partie centrale étant percée d'au moins une ouverture débouchant à l'intérieur dudit récipient et, d'autre part, on un organe de réglage, se présentant sous la forme d'un manchon qui vient coiffer, avec jeu, la partie centrale du récipient, ledit organe de réglage étant réglable en hauteur par rapport au fond du récipient.

Selon une autre caractéristique de l'invention, il est suspendu au tube convoyeur par l'intermédiaire d'un élément souple flexible.

Selon une autre caractéristique de l'invention, l'ouverture supérieure de la partie centrale est reliée au tube convoyeur par l'intermédiaire d'un tube souple et flexible.

Selon une autre caractéristique de l'invention, ledit tuyau souple a sa partie haute qui est montée sur un support creux qui vient enserrer le tube convoyeur et qui est ouvert dans sa partie inférieure, ledit support étant constitué de deux demicoquilles qui peuvent pivoter l'une par rapport à l'autre selon un axe sensiblement parallèle à l'axe du tube convoyeur, ledit tuyau Souple étant emmanché dans une partie formée par lesdites demicoquilles qui se trouve sous ledit axe de pivotement.

Selon une autre caractéristique, un dispositif selon l'invention est suspendu au tube convoyeur par un élément de suspension vertical flexible qui est accroché, par son extrémité supérieure, audit tube convoyeur et qui est fixé, par son extrémité inférieure, à ladite assiette ou audit récipient.

Selon une autre caractéristique de l'invention, ledit élément de suspension flexible comprend une partie spiralée.

Selon une autre caractéristique de l'invention, ledit élément de suspension passe à l'intérieur d'un tube dont l'extrémité inférieure est fixée dans le fond de ladite assiette et dont la partie supérieure est reliée à la paroi du récipient,

Selon une autre caractéristique de l'invention, ledit tube est fileté, le récipient comportant dans son axe un écrou qui est relié à la paroi du récipient et qui est prévu pour se visser sur ladite partie filetée pour pouvoir déplacer axialement ledit récipient par rapport à ladite assiette.

Selon une autre caractéristique de l'invention, il comprend un support fixé au tube convoyeur auquel, l'élément de suspension est relié, la partie haute dudit élément de suspension étant coudée de manière à être inclinée par rapport à la verticale et reposant, d'une part, sur une première surface dudit support à l'intérieur dudit coude et, d'autre part, sur une seconde surface dudit support à son extrémité au delà dudit coude et côté extérieur dudit coude.

Selon une autre caractéristique de l'invention, l'extrémité dudit élément de suspension comporte une partie crochue qui est prévue pour se loger dans un logement dudit support.

Selon une autre caractéristique de l'invention, il est pourvu d'un chapeau conique.

Selon une autre caractéristique de l'invention, l'assiette et le récipient sont tels que la paroi du récipient est suffisamment prés de la périphérie de l'assiette qu'elle constitue un obstacle qui empêche un poussin de séjourner dans l'assiette et de souiller les aliments.

Selon une autre caractéristique de l'invention, le bord supérieur du récipient est prévu pour recevoir une allonge dont la paroi latérale prolonge celle du récipient.

Selon une autre caractéristique de l'invention, il comporte un raidisseur dont l'anneau externe est fixé sur le bord supérieur du récipient, ledit raidisseur comprenant en outre un anneau interne relié à l'anneau externe par des bras rayonnant et prévu pour transmettre à la partie inférieure de l'élément souple les poussées des animaux contre les bords du récipient.

Selon une autre caractéristique de l'invention, il est pourvu de moyens pour immobiliser l'assiette par rapport au récipient.

Selon une autre caractéristique de l'invention, lesdits moyens d'immobilisation sont constitués d'au moins une targette dont le pêne peut pénétrer dans des trous percés dans une paroi solidaire du récipient.

Les caractéristiques de l'invention mentionnées ci-dessus, ainsi que d'autres, apparaîtront plus clairement à la lecture de la description suivante d'un exemple de réalisation, ladite description étant faite on relation avec les dessins joints, parmi lesquels:
la Fig. 1 est une vue on coupe d'un dispositif d'alimentation selon un premier mode de réalisation de l'invention,
la Fig. 2 est une vue on coupe du support d'un dispositif d'alimentation selon un mode de réalisation de l'invention qui la relie au tube convoyeur,
la Fig. 3 est une vue on coupe d'un chapeau d'un dispositif d'alimentation selon l'invention,
les Figs. 4a et 4b sont des schémas qui montrent deux modes d'utilisation d'un dispositif d'alimentation selon le premier mode de réalisation de l'invention,
la Fig. 5 est une vue et coupe selon un plan médian d'un second mode de réalisation de l'invention,

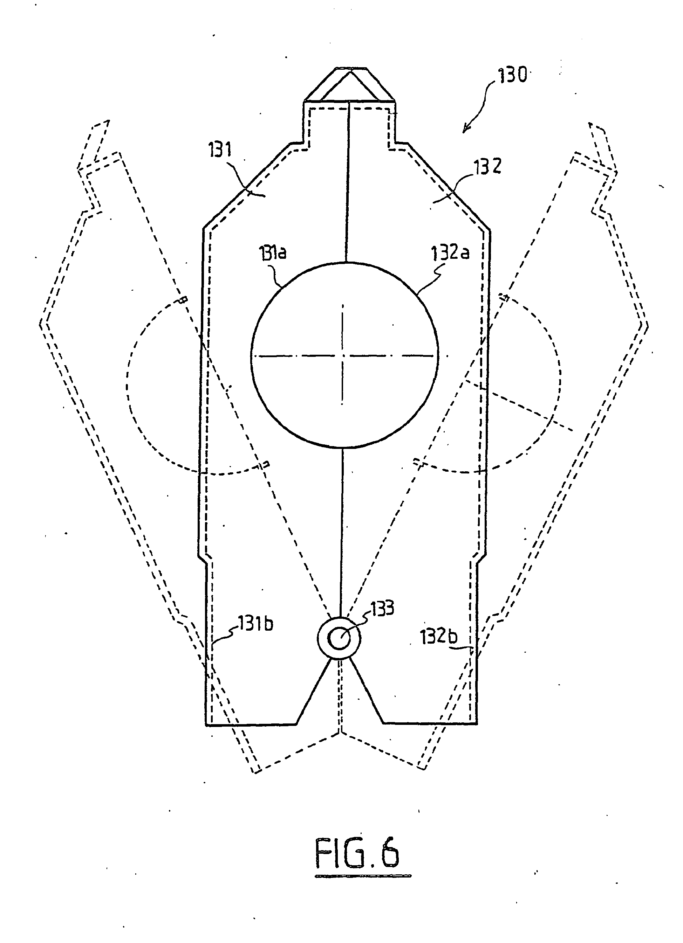

la Fig. 6 est une vue on plan d'un support d'un dispositif d'alimentation selon un mode de réalisation de l'invention, et
les Figs. 7a et 7b sont des schémas semblables aux schémas des Figs. 4a et 4b pour un dispositif d'alimentation selon le second mode de réalisation de l'invention.

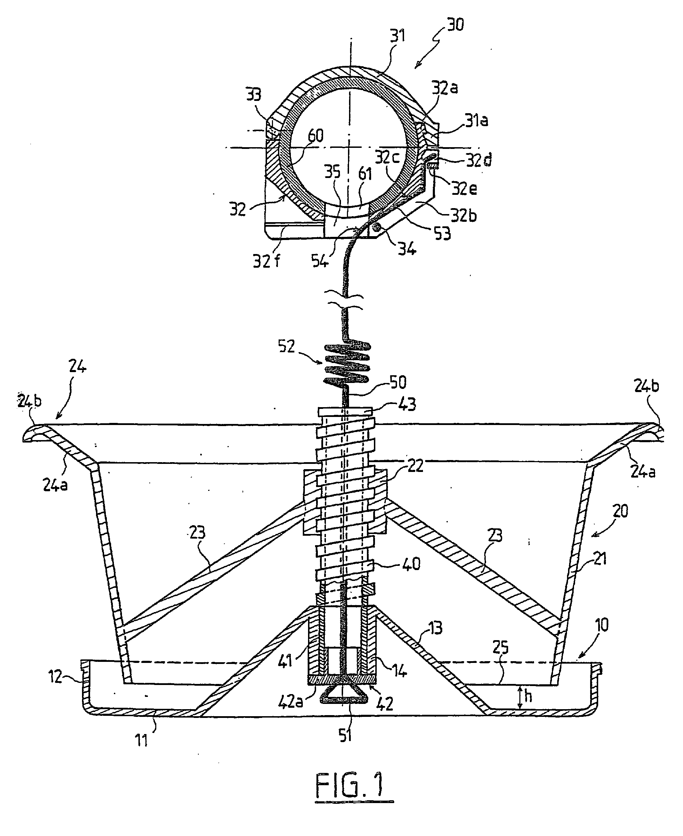

Le dispositif pour l'alimentation des volailles représenté à la Fig. 1 est essentiellement constitué d'une assiette 10, d'un récipient 20 et d'un support 30.

L'assiette 10 est de forme générale circulaire avec un fond plat 11 et un pourtour 12 qui est relevé. En son centre, elle comporte une partie conique 13 dont le sommet est pourvu d'un tube 14 qui se trouve logé à l'intérieur du volume engendré par la partie conique 13.

Dans ce premier mode de réalisation de l'invention, le récipient 20 est constitué d'une trémie qui a une forme générale tronconique à faible pente et s'évasant vers le haut. Le récipient 20 est plus haut que l'assiette 10.

Selon une caractéristique importante de l'invention, la trémie 20 a son fond 25 qui est ouvert sur l'assiette 10. Son intérieur forme une réserve pour les aliments qui ont été déversés par le tube convoyeur 60 et qui servent à alimenter l'assiette 10.

La trémie 20 est pourvue, dans son axe, d'un écrou 22 relié, par l'intermédiaire de bras sensiblement radiaux 23, à la paroi 21. Le bord supérieur de la trémie 20 est pourvu d'un évasement vers le haut 24a prolongé vers l'extérieur par une collerette 24b de section demi-circulaire.

L'évasement 24a permet de renvoyer dans la trémie 20 les aliments qui s'échappent du bec des volailles et la collerette 24b permet d'adoucir, pour les volailles, le bord supérieur de la trémie 20.

Un tube 40 est fileté sur toute sa longueur à l'exception d'une partie d'extrémité 41 qui est prévue pour être emmanchée dans le tube 14 de l'assiette 10. La partie 41 est immobilisée dans le tube 14 et est, pour ce faire, soit de section carrée emmanchée dans le tube 14 de section carrée, soit filetée et vissée dans le tube 14 qui lui a son trou interne fileté, soit constituée de tout autre moyen équivalent. Sur toute sa longueur, le tube 40 est creux. Un bouchon 42 est emmanché à l'intérieur de la partie creuse 41 du tube 40. Le bouchon 42 comporte une paroi d'extrémité 42a qui forme une collerette qui vient en butée contre le bord inférieur du tube 14.

le tube 40 est vissé sur l'écrou 22 de la trémie 20. Ainsi, une rotation de la trémie 20 par rapport au tube 40 entraîne la trémie 20 en translation axiale par rapport à l'assiette 10. Pour rendre cette rotation possible on immobilise l'assiette 10 ce qui a pour effet d'immobiliser le tube 40.

La translation de la trémie 20 par rapport à l'assiette 10 permet d'ajuster la hauteur h, ce qui a pour effet de régler le débit moyen des aliments qui sont contenus dans la trémie 20 et qui tombent dans l'assiette 10. Lorsque la hauteur h est nulle, le bord inférieur 25 de la trémie 20 est en contact avec le fond de l'assiette 10 si bien que le fond de la trémie 20 est obstrué.

On comprendra que l'assiette 10 peut être considérée comme une mangeoire dans la mesure où le niveau d'aliment qu'elle peut contenir est réglable.

Dans la partie supérieure du tube 40, est emmanché un bouchon 43 qui présente sensiblement la même structure que le bouchon 42.

A l'intérieur du tube 40, passe un élément de suspension 50 dont l'extrémité inférieure est recourbée sur elle-même afin de former une partie large 51. Cette partie 51 est en butée contre la paroi d'extrémité 42a du bouchon 42. Le bouchon 42 comporte une fente radiale (non représentée) qui permet de positionner l'élément 50 dans le bouchon 42 et la partie 51 contre la paroi 42a.

L'élément 50 passe à travers un trou qui est prévu dans l'axe du bouchon 43 et a sa partie haute 53 qui est fixée au support 30.

On notera qu'une fente radiale (non représentée) est prévue sur le bouchon 43 pour mettre en place l'élément 50 ou, au contraire, le désengager facilement dudit bouchon 43.

Ainsi, l'ensemble qui est constitué par le récipient 20 et l'assiette 10 est suspendu, au moyen de l'élément 50, au support 30, à une hauteur qui dépend de la longueur de l'élément de suspension 50. L'élément 50 est avantageusement flexible et il est par exemple constitué d'une tige métallique présentant des propriétés de ressort. Il peut comporter de plus une partie spiralée 52 qui contribue à donner encore à cet élément 50 une plus grande flexibilité.

Le support 30 est prévu pour enserrer un tube convoyeur 60 d'une chaîne de distribution d'aliments sous laquelle est installé le dispositif d'alimentation de l'invention. A l'intérieur du tube 60, est normalement prévu un élément de convoyage (non représenté), tel qu'une vis de convoyage, qui est prévu pour acheminer l'aliment d'un silo à des mangeoires. Afin de pouvoir déverser l'aliment qu'il achemine dans le dispositif d'alimentation de l'invention, le tube 60 est percé, dans sa partie inférieure, d'une lumière 61 par laquelle passent les aliments à distribuer dans la trémie 20 et l'assiette 10.

Dans l'exemple de réalisation représenté, le support 30 est constitué de deux parties 31 et 32 dont l'une 31 peut pivoter par rapport à l'autre 32 autour d'un axe 33 et se solidarise par rapport à l'autre 32 au moyen d'un ergot 31a s'engageant dans une rainure correspondante 32a de la partie 32. Lorsque la partie 31 est fermée sur la partie 32, l'une et l'autre enserrent le tube 60 de la chaîne de distribution. Des moyens, tels que des pattes du tube 60 s'engageant dans des fentes du support 30, peuvent être prévus pour immobiliser le support 30 sur le tube 60 lorsque les parties 31 et 32 sont fermées l'une sur l'autre.

Le support 30 est pourvu d'une lumière 35 qui, lorsque le support 30 est en place sur le tube 60, se superpose à la lumière 61 du tube 60 permettant aux aliments de tomber à l'extérieur du tube 60 dans la trémie 20.

On a prévu, dans la partie inférieure 32 du support 30 deux rainures 32f (une seule est visible sur la Fig. 1) qui constituent des glissières pour une trappe (non repésentée) prévue pour obturer la lumière 35. Lorsqu'elle est fermée, cette trappe empêche l'écoulement de l'aliment du tube 60 au récipient 20.

Le support 30 comporte également une fente inclinée 32b longeant la partie inférieure 32 du support 30 et une cavité 32d communiquant avec la partie haute de la fente 32b par un trou percé dans une paroi 32e séparant la fente 32b de la cavité 32d. Une goupille 34 est fixée de manière à traverser la partie basse de la fente 32b.

La partie haute 53 de l'élément de suspension 50 est coudée de manière à former un coude 54 et à être inclinée par rapport à la verticale. Cette partie 53 passe à l'intérieur de la fente 32b entre le fond 32c de la fente 32b et la goupille 34 et est plaquée dans le fond 32c de la fente 32b. Ainsi, la partie 53 repose, d'une part, sur une première surface qui est constituée par la goupille 34 et qui se trouve à l'intérieur du coude 54 et, d'autre part, sur une seconde surface qui est constituée par le fond 32c de la fente 32b et qui se trouve à son extrémité au-delà dudit coude 54 et côté extérieur dudit coude 54.

La partie haute 53 de l'élément de suspension passe à travers le trou de la paroi 32e et débouche dans la cavité 32d où elle présente une extrémité crochue. On notera que l'élément de suspension 50 est coudé en 54 de manière à pouvoir longer le fond 32c de la fente 32b.

Selon un mode de réalisation de l'invention, l'ensemble que forment la trémie 20 et l'assiette 10 est suspendu, par l'intermédiaire de l'élément de suspension 50 et du support 30, au tube convoyeur 60. Cet ensemble est facilement démontable du support 30. Pour cela, il faut désengager le bouchon 42 de la partie 41 de tube 40, puis faire passer l'élément 50 dans la fente radiale du bouchon 42 afin de désengager l'élément 50. La partie 51 de l'élément 50 coulisse à l'intérieur de la vis 40 et sort par l'extrémité qui normalement reçoit le bouchon 43. Celui-ci est préalablement retiré.

Il est possible ainsi de séparer l'ensemble formé par le récipient 20 et l'assiette 10 du support 30, ceci afin de pouvoir le nettoyer.

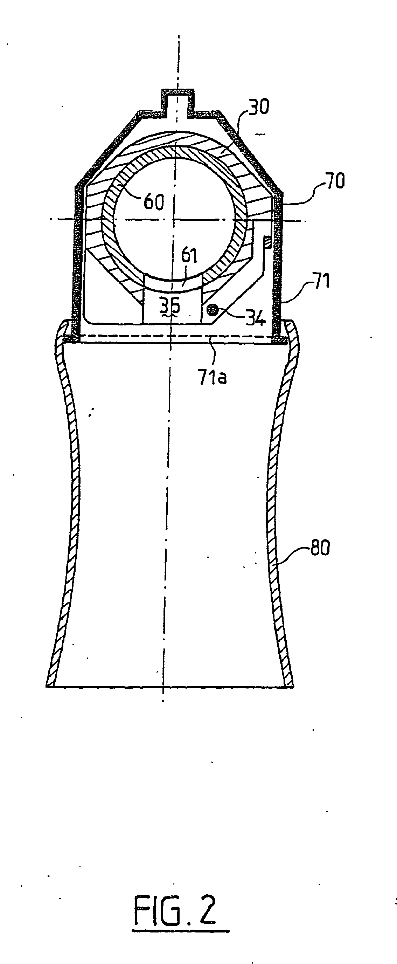

A la Fig. 2, on a représenté le support 30 et le tube 60 avec leurs lumières respectives 35 et 61. On n'a pas représenté l'élément de suspension 50 mais seulement la goupille 34. Le support 30 est chapeauté par un élément de support 70 qui est complètement ouvert dans sa partie inférieure 71. Cette partie 71 comporte une collerette 71a. Dans la partie basse de l'élément 70, est monté un tube souple 80 qui enserre élastiquement la collerette 71a. Le tube souple 80 acquiert de ce fait une forme galbée. Il sert de guidage de l'aliment lors de son écoulement du tube convoyeur 60 vers la trémie 20.

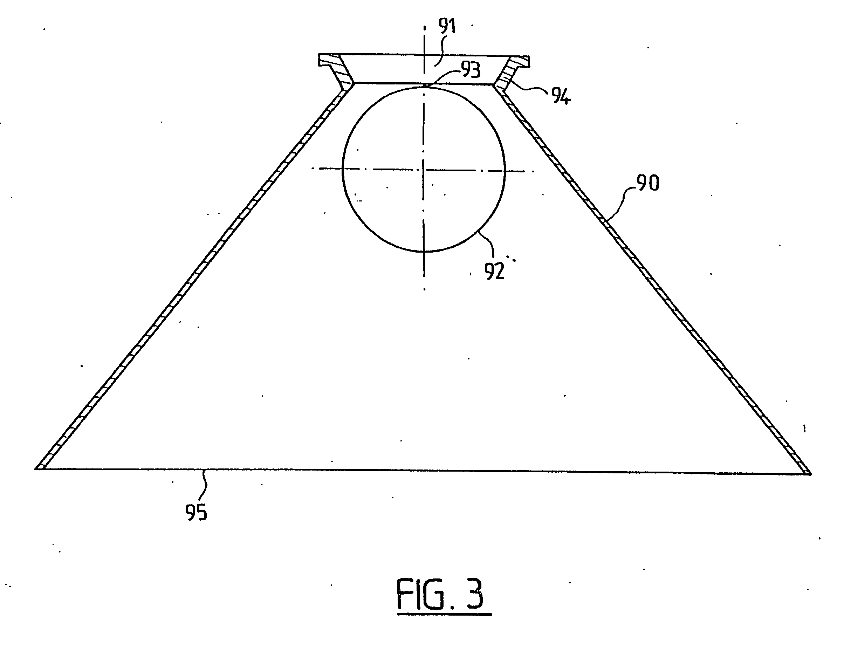

On a représenté à la Fig. 3 un chapeau 90 qui est prévu pour être monté, selon l'utilisation et la destination du dispositif d'alimentation, soit directement sur l'élément de support 70 pour le chapeauter, soit sur le tube souple 80.

Le chapeau 90 représenté a une forme conique dont le sommet est percé d'un trou 91. La paroi du chapeau 90 est percée de deux trous 92 qui se font face et sont prévus pour laisser passer le tube convoyeur 60. Deux fentes 93 relient respectivement les trous 92 au trou 91. A son sommet, le chapeau 90 présente des bords relevés 94 servant à recevoir une bague élastique (non représentée) qui agit indirectement sur les bords des trous 92 afin d'enserrer le tube convoyeur 60.

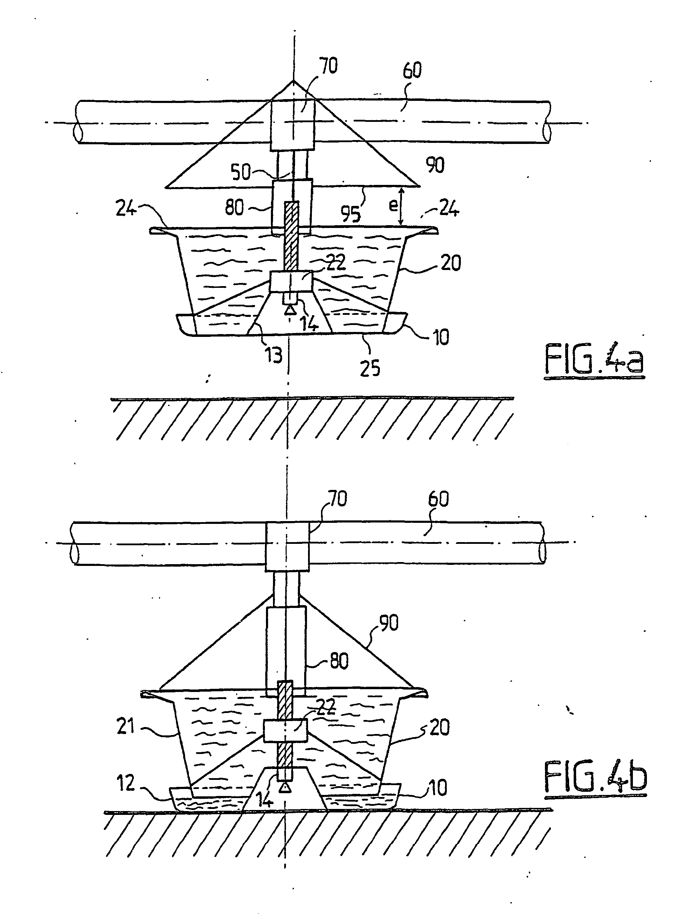

On a représenté respectivement et de manière schématique aux Figs. 4a et 4b deux modes d'utilisation d'un dispositif d'alimentation selon le premier mode de réalisation de l'invention.

Comme on le verra par la suite, le mode d'utilisation représenté à la Fig. 4a est particulièrement approprié à l'alimentation des dindes et des dindons. Le chapeau 90 chapeaute l'élément de support 70, ainsi que le support 30. Un espace e est ménagé entre le bord supérieur 24 du récipient 20 et le bord inférieur 95 du chapeau 90 pour que l'animal puisse y passer le cou. L'élément de suspension 50 a sa longueur qui est telle que l'ensemble formé par l'assiette 10 et le récipient 20 soit au-dessus du sol (représenté par des hachures). Le récipient 20 a son bord inférieur 25 qui repose totalement dans le fond de l'assiette 10 laquelle obstrue totalement l'ouverture inférieure de récipient 20. Pour ce faire, l'écrou 22 est desserré jusqu'au tube 14. Le récipient 20 est rempli d'aliments jusqu'à la hauteur désirée, relativement près du bord supérieur 24.

Pour s'alimenter, l'animal passe la tête dans l'espace e entre le bord supérieur 24 du récipient 20 et le bord inférieur 95 du chapeau 90, ce qu'il fait en allongeant le cou. Il prend ainsi l'aliment dans la partie centrale du récipient 20 et évite par conséquent d'en renverser sur la litière. Du fait du chapeau 90, il ne peut relever la tête et évite là encore d'en renverser sur la litière.

On notera que la collerette 24b adoucit le bord supérieur du récipient 20 et évite ainsi que l'animal se blesse la caroncule.

Le mode d'utilisation représenté à la Fig. 4b est plus approprié pour les poussins ou les dindonneaux. Dans ce mode, l'assiette 10 repose sur le sol et le bord inférieur du récipient 20 est à quelques centimètres du fond de l'assiette 10. Ainsi, l'aliment se déverse dans l'assiette 10 et, en particulier, dans la partie entre le bord 12 et la paroi 21 du récipient 20.

C'est dans cette partie que l'animal picore. L'assiette 10 et le récipient 20 sont tels que la paroi 21 du récipient 20 est suffisamment près de la périphérie 12 de l'assiette 10 qu'elle constitue un obstacle qui empêche un poussin de séjourner dans l'assiette 10.

Le chapeau 90 chapeaute le récipient 20 et est monté sur le col formé par le tuyau 80 monté lui-même sur l'élément de support 70, comme cela est représenté à la Fig. 2. L'élément de support 70 enserre le tube convoyeur 60.

Dans un mode d'utilisation ou un autre, le chapeau 90 évite à l'animal de se percher sur le dispositif d'alimentation, notamment de par sa forme conique sur laquelle l'animal n'a aucune prise.

On notera que, dans le mode d'utilisation de la Fig. 4a, lorsque les animaux heurtent ou poussent le dispositif d'alimentation, notamment le chapeau 90 ou le récipient 20, le dispositif d'alimentation ne se brise pas et ceci du fait de la flexibilité de l'élément de suspension 50, flexibilité accrue par l'utilisation d'une partie spiralée 52.

On constatera que dans ce mode de réalisation, l'assiette 10 peut être considérée comme une mangeoire alors que le récipient 20 ne constitue qu'une réserve d'aliment.

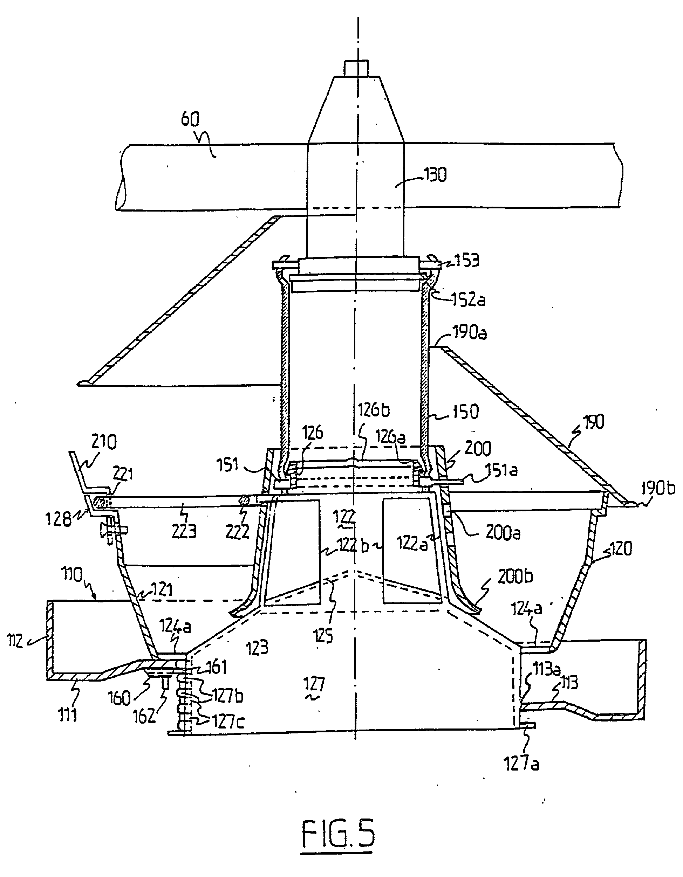

A la Fig. 5, on a représenté un second mode de réalisation de l'invention. Les éléments qui ont la même fonction que dans le premier mode portent les mêmes références additionnées de 100. Ainsi, peut-on voir l'assiette 110 pourvue d'un fond 111 et d'un pourtour relevé 112, le récipient 120, le support 130 du dispositif d'alimentation sur un tube convoyeur 60 et le moyen de suspension verticale 150.

Ce mode de réalisation constitue un perfectionnement important du dispositif d'alimentation du premier mode. Dans ce mode de réalisation, comme on le verra par la suite, le récipient 120 n'est plus une simple trémie, comme dans le mode de réalisation précédent, mais constitue une mangeoire, dans le sens qu'il comporte des moyens de réglage de la quantité d'aliment qu'il contient. Quant à l'assiette 110, comme dans le premier mode de réalisation, elle peut être considérée également comme une mangeoire. Comme on le verra par la suite, le mode de réalisation apparaît donc comme deux mangeoires superposées oui partagent un même tuyau d'alimentation 150.

Dans ce mode de réalisation, le récipient 120 comporte une partie centrale 122 représentée non coupée pour la lisibilité de la Fig. 5. La partie centrale 122 est tronconique et se trouve dans l'axe du récipient 120. Elle a sa paroi latérale 122a qui est faiblement évasée vers le bas. Cette partie centrale 122 est pourvue, ménagées dans sa paroi latérale 122a, d'ouvertures 122b, par exemple au nombre de quatre, de relativement grandes dimensions, par exemple occupant à elles toutes la moitié de la surface de la paroi latérale 122a. Ces ouvertures, dans l'exemple de réalisation représenté, ont une section sensiblement rectangulaire.

La partie centrale 122 a son arête inférieure oui est reliée au fond 123 du récipient 120, fond 123 qui est également tronconique évasé vers le bas mais de pente plus importante que celle de la partie centrale 122. Le fond 123 est prolongé dans sa partie inférieure par une partie horizontale 124 dans laquelle sont ménagées des lumières 124a occupant une surface importante de la partie 124, par exemple la moitié de la surface totale de la partie 124. Les lumières 124a permettent la communication de l'intérieur du récipient 120 avec l'intérieur de l'assiette 110

Dans la partie interne de la partie centrale 122, est monté un couvercle 125 dont la paroi conique est sensiblement en prolongement vers le haut de la paroi du fond 123 du récipient 120. Le couvercle 125 est par exemple monté par clipage sur la partie centrale 122 et est nécessité pour des commodités de démoulage, au moment de sa fabrication, du récipient 120.

Dans sa partie haute, la partie centrale 122 est pourvue d'un col 126 représenté en coupe et pourvu d'un rebord 126a. Dans ce col 126, est également prévu un croisillon 126b dont la fonction est d'autoriser le montage d'un élément souple (non représenté) tel que l'élément de suspension 50 du premier mode de réalisation entre le support 130 et le récipient 120. Ce montage est facultatif et n'est pas obligatoirement nécessaire à ce mode de réalisation.

L'élément de suspension 150 est, comme dans le cas du premier mode de réalisation de l'invention, flexible pour absorber les chocs auxquels est soumis le dispositif d'alimentation de la part des animaux. Dans le mode de réalisation représenté à la Fig. 5, il est constitué d'un tuyau 150 en matière souple, tel qu'un caoutchouc, dont l'extrémité basse est montée sur le col 126 du récipient 120 et est fixée au moyen d'un collier de serrage 151 et dont l'extrémité haute est montée sur le support 130 par l'intermédiaire d'uns bague 152, le tuyau 150 étant fixé sur ladite bague 152 par un collier ce serrage 153.

On notera que, pour augmenter la rigidité de l'élément de suspension 150, il est possible de le doubler de tiges élastiques (non représentées) respectivement montées sur des génératrices de la paroi du tuyau 150 ou d'une tige élastique dont la partie basse est montée sur le croisillon 126b.

Le rebord 126a du col 126 et le rebord 152a de la bague 152 permettent d'obtenir une meilleure fixation du tuyau 150 sur le col 127 et la bague 152.

On constatera que sur la Fig. 5 ledit tuyau souple 150 est en prolongement de la paroi latérale de la partie centrale 122 du récipient 120.

On constate que l'aliment qui est véhiculé par le tube d'alimentation 60, est déversé à l'intérieur du support 130, puis dans le tuyau 150. Là, il se déverse dans l'espace à l'intérieur de la partie centrale 122 du récipient 120, passe par les fenécres 122b où il est conduit vers le fond 123 du récipient 120.

On remarquera que le volume formé par l'intérieur du tube 150 et l'intérieur de la partie centrale 122 constitue une réserve d'aliment qui peut se déverser dans le récipient 120 ou dans l'assiette 110. C'est donc une réserve commune aux deux mangeoires que constituent respectivement le récipient 120 et l'assiette 110.

Autour de la partie centrale 122 du récipient 120, est monté un organe de réglage 200 se présentant sous la forme d'un manchon qui épouse la forme générale de la partie centrale 122 et qui vient la coiffer, mais à une certaine distance de celle-ci, par exemple de l'ordre de plusieurs millimètres. La paroi latérale de l'organe 200 est percée de trous 200a qui sont prévus pour recevoir une tige 151a qui fait saillie latéralement sur le collier de serrage 151.

Cet organe de réglage 200 permet de régler la quantité d'aliment qui va se déverser de la réserve d'aliment formée à l'intérieur du tube 150 et de la partie centrale 122, et ce jusqu'à une hauteur prédéterminée dans le récipient 120, transformant ainsi ce dernier en une mangeoire, comme il a déjà été expliqué.

L'organe 200 comporte un rebord rabattu 200b qui suit la paroi de fond 123 du récipient 120. Ce rebord 200b a pour fonction d'empêcher les animaux de venir picorer à la source d'aliment qui est constituée par la réserve mentionnée ci-dessus.

On notera que l'organe 200 pourrait également être constitué d'un tuyau logé à l'intérieur de la partie centrale 122 et dont la paroi latérale est adjacente à la partie 122. Ce tuyau serait fermé dans sa partie inférieure et comporterait, dans sa paroi latérale, des fenêtres inclinées. En faisant tourner ce tuyau, on obturerait plus ou moins les ouvertures 122b de la partie centrale 122 réglant ainsi la quantité d'aliments s'écoulant par lesdites ouvertures 122b.

La mangeoire constituée par le récipient 120 et l'organe de réglage 200 est superposée, comme on va le voir, à une seconde mangeoire constituée notamment, comme dans le premier mode de réalisation, par l'assiette 110 mobile par rapport au récipient 120.

Du fond 123, part vers le bas, une partie cylindrique 127 dont l'arête inférieure est terminée par un rebord 127a.

L'assiette 110 a son fond 111 qui est formé d'une partie centrale 113 plane et légèrement surélevée par rapport au fond 111. Dans cette partie centrale 113, est percé un trou 113a dont le diamètre est sensiblement égal, au jeu près, au diamètre extérieur de la partie cylindrique 127.

L'assiette 110 est montée sur le récipient 120 de manière que la partie cylindrique 127 soit logée dans le trou 113a. Ainsi, l'assiette 110 peut coulisser axialement par rapport au récipient 120 et prendre toutes les positions entre une position basse et une position haute définies ci-dessous.

En position basse de l'assiette 110, montrée sur la partie droite de la Fig. 5, le récipient 120 a son fond 122 qui est ouvert sur l'assiette 110 par les lumières 124a. Par contre, en position haute de l'assiette 110, montrée sur la partie gauche de la Fig. 5, les lumières 124a du fond 124 du récipient 120 sont obstruées par la partie plane centrale 113 de l'assiette 110.

La hauteur d'aliment dans l'assiette 110 est liée à la hauteur relative du récipient 120 au-dessus de l'assiette 110. Il en résulte que l'assiette 110 constitue, également dans ce mode de réalisation du dispositif d'alimentation de l'invention, une mangeoire.

Pour maintenir la position relative de l'assiette 110 et du récipient 120, on a prévu les moyens de verrouillage qui sont maintenant décrits.

Sur une génératrice de la partie cylindrique 127, est prévue une série de protubérances 127b séparées entre elles par des trous 127c percés de part on part dans la paroi latérale de la partie cylindrique 127. On a prévu sur la face inférieure du fond 111, une targette 160 dont le pêne 161 est prévu pour s'engager dans l'un des trous 127c de la partie 127. Un levier de comande 162 est prévu pour faire coulisser le pêne 161 afin qu'il puisse pénètrer dans l'un des trous 127c.

Lorsque le pêne 161 se trouve dans l'un des trous 127c, l'assiette 111 est immobilisée par rapport au récipient 120. Les protubérances 127b permettent d'obtenir un coulissement par crans de l'assiette 111 par rapport au récipient 120.

Un ou plusieurs moyens de verrouillage tels que ceux qui viennent d'être décrits peuvent être prévus.

Il résulte du fait que les trous soient percés de part en part dans la paroi 127 que ceux-ci ne peuvent être obstrués par de l'aliment, l'introduction du pêne 161 dans l'un de ces trous poussant les aliments accumulés et les évacuant.

A la Fig. 5, on a représenté en détail le support 130. Il est essentiellement constitué de deux demi-coquilles 131 et 132 de forme générale parallélépipèdique. Deux parois latérales opposées de chaque demi-coquille présentent des trous demi-cylindriques 131a et 132a débouchant qui se correspondent l'un avec l'autre et qui ont un diamètre voisin de celui du tube convoyeur 60 de l'installation. Les demi-coquilles 131 et 132 peuvent pivoter l'une par rapport à l'autre selon un axe 133 qui est parallèle à l'axe des trous 131a et 132a mais décalé vers le bas par rapport à cet axe.

On notera que, lorsque les deux demi-coquilles 131 et 132 sont fermées, les trous 131a et 132a de chaque paroi forment un unique trou circulaire.

Comme on peut le remarquer, le support 130, monté sur le tube convoyeur 60, fonctionne de la manière suivante. Il peut prendra deux positions extrêmes: une position de fermeture dans laquelle les trous semi-cylindriques de chaque demi-coquille enserrent le tube 60 et une position d'ouverture dans laquelle il est dégagé du tube 60 duquel il peut être enlevé.

Les deux demi-coquilles 131 et 132 sont respectivement pourvues, en leurs parties basses sous l'axe de pivotement 133, de parties demi-cylindriques 131b et 132b lesquelles forment, lorsque les demi-coquilles 131 et 132 sont fermées, une unique partie cylindrique située dans un axe sensiblement perpendiculaire à l'axe des trous 131a et 132a. La bague 152 est prévue pour âtre montée sur la partie cylindrique formée par les parties 131b et 132b. Lorsque c'est le cas et lorsque le tuyau 150 est emmanché et serré sur cette bague 152 au moyen du collier 153, du fait de l'élasticité relative de la bague 152, le collier 153 serre également la partie basse du support 130, ce qui a pour effet que le support 130, par pincement sur le tuyau 60, est fermement maintenu sur le tube convoyeur 60.

Le support 130 a sa partie intérieure qui est ouverte. On remarquera à cet égard l'absence de pointillés marquant l'épaisseur des parois des demi-coquilles 131 et 132.

Un chapeau 190, de forme générale conique, est monté sur la mangeoire de la Fig. 5. Il est pourvu, à son sommet, d'un trou axial 190a de diamètre supérieur au diamètre de l'élément de suspension 150 pour pouvoir y être enfilé. Sa partie basse 190b est prévue pour reposer sur la partie haute du récipient 120 de manière à le fermer, notamment lorsque l'assiette 110 est dans sa position basse, comme cela est montré sur la partie droite de la Fig. 5. Par contre, lorsque l'assiette 110 est dans sa position basse, le chapeau 190 est remonté de manière à laisser un espace entre la partie basse du chapeau 190 et la partie haute du récipient 120.

On notera que, dans certaines applications, sur le récipient 120, est montée une allonge 210 (représentée en traits fins sur la partie gauche de la Fig. 5) de forme générale tronconique dont la paroi latérale est prévue pour prolonger sensiblement la paroi latérale 121 du récipient 120. L'allonge 210 est par exemple fixée par des rivets 211 sur la paroi du récipient 120. L'allonge 210 permet notamment d'augmenter la capacité du récipient 120.

On a prévu un raidisseur 220 constitué d'un anneau 221 qui est logé dans le rebord périphérique 128 du récipient 120 et qui est rendu prisonnier par l'allonge 210. Il comprend encore un second anneau 222 de diamètre voisin de celui du manchon 200 duquel rayonnent des bras 223 dont l'extrémité externe est solidaire de l'anneau 221.

Le raidisseur 220 est particulièrement avantageux notamment lors de l'utilisation d'une allonge 210. En effet, les animaux peuvent cogner brutalement la paroi externe de l'allonge 210, ce qui entraînerait, sans le raidisseur 220, une déformation du récipient 120, voire sa casse. Avec le raidisseur 220, les efforts sont transmis, par l'anneau interne 222, au col 126, et c'est le tube 150, qui, en fléchissant, les absorbe.

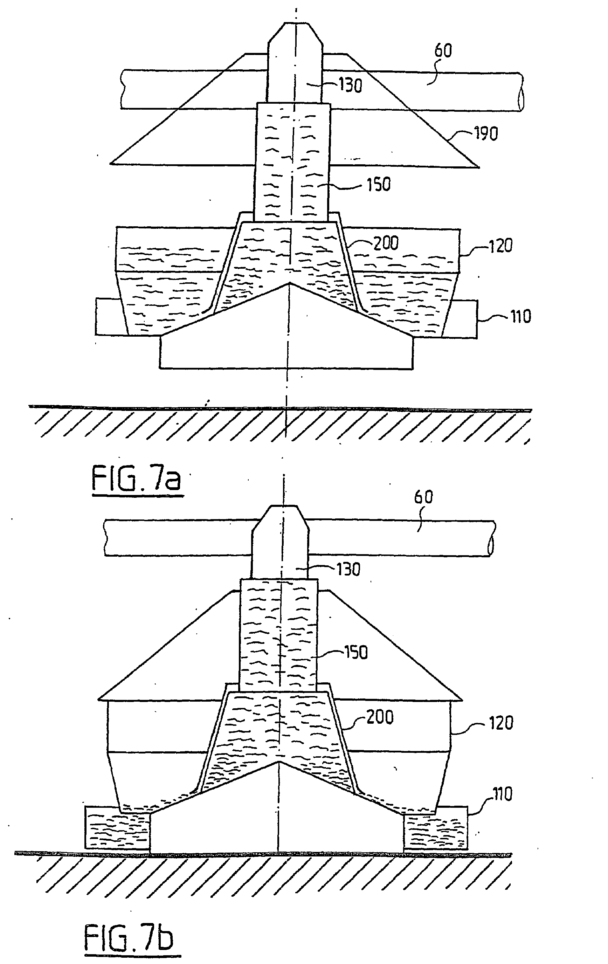

Dans les Figs. 7a et 7b, on a représenté les modes d'utilisation d'un distositif d'alimentation selon le second mode de réalisation de l'invention. On reconnaîtra l'assiette 110, le récipient 120, le support 130, l'élément de suspension 150 et l'organe de réglage 200.

Les particularités d'utilisation sont les mêmes que celles des modes d'utilisation des Figs. 4a et 4b.

Comme on l'aura compris, par équivalence aux modes d'utilisation dépeints dans les Figs. 4a et 4b, le mode d'utilisation représenté à la Fig. 7a est particulièrement approprié à l'alimentation des dindes et des dindons alors que le mode d'utilisation représenté à la Fig. 7b est approprié pour les poussins ou les dindonneaux.

Dans le second mode de réalisation, le dispositif d'alimentation de l'invention apparaît donc comme deux mangeoires superposées qui partagent un même tuyau d'alimentation.

On comprendra qu'ainsi le dispositif d'alimentation de l'invention est polyvalent et peut être adapté à tout type de volaille à des âges différents.

On notera à cet égard que le dispositif d'alimentation du second mode de réalisation peut âtre utilisé de manière que les mangeoires respectivement formées par le récipient 120 et l'assiette 110 puissent fonctionner indépendamment l'une de l'autre ou simultanément. En fonctionnement simultané, les volailles peuvent accéder à la mangeoire qui leur convient. Elles ont le choix au cours de leur croissance entre l'une ou l'autre mangeoire, l'aliment étant disponible durant une courte période dans les deux mangeoires.

On comprendra que le concept de l'invention de deux mangeoires superposées tel qu'il est décrit en relation avec le second mode de réalisation peut être étendu à celui d'un nombre quelconque de mangeoires superposées. Pour ce faire, un dispositif d'alimentation selon l'invention comprend une assiette, un récipient ou une pluralité de récipients superposés, et des moyens pour mettre, à volonté, on communication ledit tube convoyeur avec l'intérieur de chacun desdits récipients et avec l'intérieur de ladite assiette, lesdits récipients et ladite assiette comportant des moyens de réglage de la hauteur d'aliment qu'ils contiennent de manière à fonctionner à la manière d'une mangeoire.

## Revendications

1. Dispositif d'alimentation pour animaux, tels que des volailles, apte à être suspendu à un tube convoyeur d'aliment (60) et qui comporte d'une part une mangeoire constituée par une assiette (10. 110) et d'autre part un récipient (20, 120) en communication avec ladite assiette (10, 110), ledit récipient (20, 120) étant superposé à ladite assiette (10,110) et ouvert dans sa partie inférieure (25, 123) de façon que l'allment distribué à l'intérieur du récipient (20, 120) depuis le convoyeur (60) puisse être déversé dans l'assiette (10,110), **caractérisé en ce que** ledit récipient (20, 120) est ouvert dans sa partie supérieure et évasé de façon telle qu'il forme une mangeoire le dispositif étant ainsi constitué de deux mangeoires (10,110 ; 20, 120) superposées.

2. Dispositif selon la revendication 1, **caractérisé en ce qu**'il comprend des moyens pour sélectivement interrompre le déversement de l'aliment depuis l'intérieur de la mangeoire supérieure (20, 120) dans l'assiette (10,110).

3. Dispositif selon l'une quelconque dès revendications 1 et 2, dans lequel ladite assiette (10, 110) et ledit récipient (20, 120) formant mangeoires infé- rieure et supérieure sont prévus pour pouvoir se déplacer axialement l'un par rapport à l'autre, **caractérisé en ce que** l'aliment est déversé dans l'assiette depuis le récipient à travers une fenêtre définie entre le bord inférieur (25, 123) du récipient (20,120) et le fond de l'assiette (10,110), et **en ce que** ladite assiette (10, 110) et ledit réci- pient (20, 120) sont prévus pour pouvoir prendre toutes les positions qui sont comprises entre une position dite d'ouverture et une position dite de fer- meture, l'intérieur du récipient (20, 120) étant en communication avec l'intérieur de l'assiette (10, 110) là où est distribué l'aliment dans toutes les positions à l'exception de la position dite de fermeture dans laquelle la fond (25) dudit récipient (20, 120) est obstrué par ledit fond (11, 111) de ladite assiette (10, 110).

4. Dispositif d'alimentation pour animaux selon la revendication 1, **caractérisé en ce que** le récipient (20, 120) est pourvu en son fond (25, 124) d'une fenêtre (124a) pouvant être, à volonté, soit ouverte sur le fond (11, 111) de l'assiette (10, 110) soit obstruée par ledit fond (11, 111), ladite assiette (10, 110) fonctionnant alors à la manière d'une mangeoire.

5. Dispositif d'alimentation pour animaux selon la revendication 1 ou 2. **caractérisé en ce qu'**il comprend en outre des moyens de réglage de la hauteur d'aliment dans ledit récipient (120), ledit récipient (120) fonctionnant alors à la manière d'une mangeoire.

6. Dispositif d'alimentation pour animaux selon la revendication 5 **caractérisé en ce que** lesdits moyens de réglage consistent, d'une part, en une partie centrale (122) creuse qui est pourvue d'un fond (125) et dont l'ouverture supérieure est destinée à être mise en communication avec le tube convoyeur (60) auquel ledit dispositif d'alimentation est destiné à être suspendu, la paroi latérale (122a) de ladite partie centrale (122) étant percée d'au moins une ouverture (122b) débouchant à l'intérieur dudit récipient (120) et, d'autre part en un organe de réglage (200) se présentant sous la forme d'un manchon qui vient coiffer, avec jeu, la partie centrale (122) du récipient (120), ledit organe de réglage (200) étant réglable en hauteur par rapport au fond (123, 124) du récipient (120).

7. Dispositif d'alimentation selon une des revendications précédentes, **caractérisé en ce qu'**il comprend un élément souple flexible (50, 150) prévu pour assurer la suspension dudit dispositif.

8. Dispositif d'alimentation selon la revendication 6, **caractérisé en ce que qu**'il comprend un tuyau (150) souple et flexible prévu pour relier l'ouverture supérieure de la partie centrale (122) au tube convoyeur (60) auquel ledit dispositif d'alimentation est destiné à être suspendu.

9. Dispositif d'alimentation selon la revendication 8, **caractérisé en ce que** ledit tuyau souple (150) a son extrémité inférieure qui est prévu pour être montée sur une support (130) creux qui vient enserrer le tube convoyeur (60) auquel ledit dispositif d'alimentation est destiné à être suspendu et qui est ouvert dans sa partie supérieure, ledit support (130) étant constitué de deux demi-coquilles (131 et 132) qui peuvent pivoter l'une par rapport à l'autre selon un axe sensiblement parallèle à l'axe dudit tube convoyeur (60), ledit tuyau souple (150) étant emmanché dans une partie formée par lesdites demi-coquilles (131 et 132) qui se trouve sous ledit axe de pivotement (133).

10. Dispositif d'alimentation selon la revendication 7, **caractérisé en ce que** ledit élément de suspension (50) est accroché par son extrémité inférieure, à ladite assiette (10, 110) ou audit récipient (20, 120).

11. Dispositif d'alimentation selon la revendication 10, **caractérisé en ce que** ledit élément de suspension flexible comprend une partie spiralée (52).

12. Dispositif d'alimentation selon la revendication 10 ou 11, **caractérisé en ce que** ledit élément de suspension (50) passe à l'intérieur d'un tube (40) dont l'extrémité inférieure est fixée dans le fond (11) de ladite assiette (10) et dont la partie supérieure est reliée à la paroi (21) du récipient (20) par l'intermediaire d'un écrou (22), lequel écrou (22) se visse sur la partie filetée du tube (40), et constitue de cette façon une liaison entre le tube (40) et la paroi (21).

13. Dispositif d'alimentation selon la revendication 12, **caractérisé en ce que** ledit tube (40) est fileté, le récipient (20) comportant dans son axe un écrou (22) qui est relié à la paroi (21) du récipient (20) et qui est prévu pour se visser sur ladite partie filetée du tube (40) pour pouvoir déplacer axialement ledit récipient (20) par rapport à ladite assiette (10).

14. Dispositif d'alimentation selon une des revendications 10 à 13, **caractérisé en ce qu'**il comprend un support (30) prévu pour être fixé au tube convoyeur (60) auquel l'élément de suspension (50) est destiné à être relié, la partie haute dudit élément de suspension (50) étant coudée de manière à être inclinée par rapport à la verticale et reposant, d'une part, sur une première surface qui est constituée par goupille (34) et qui se trouve à l'intérieur d'un coude (54) et, d'autre part, sur une seconde surface qui est constituée par le fond (32c) de la fente (32b) et qui se trouve à son extrémité au delà dudit coude (54) et côté extérieur dudit coude (54).

15. Dispositif d'alimentation selon la revendication 14, **caractérisé en ce que** l'extrémité de la partie haute dudit élément de suspension (50) comporte une partie crochue qui est prévue pour se loger dans un logement (32d) dudit support (30).

16. Dispositif d'alimentation selon une des revendications précédentes, **caractérisé en ce qu'**il est pourvu d'un chapeau conique (90, 190).

17. Dispositif d'alimentation selon une des revendications précédentes, **caractérisé en ce que** l'assiette (10, 110) et le récipient (20, 120) sont tels que la paroi (21, 121) du récipient (20, 120) est suffisamment près de la périphérie (12, 112) de l'assiette (10, 110) qu'elle constitue un obstacle qui empêche un poussin de séjourner dans l'assiette (10, 110) et de souiller les aliments.

18. Dispositif d'alimentation selon une des revendications précédentes, **caractérisé en ce que** le bord supérieur du récipient (20, 120) est prévu pour recevoir une allonge (210) dont la paroi latérale prolonge celle du récipient (20, 120).

19. Dispositif d'alimentation selon une des revendications précédentes, **caractérisé en ce qu'**il comprend un raidisseur (220) dont l'anneau externe (221) est fixé sur le bord supérieur du récipient (20, 120), ledit raidisseur (220) comprenant en outre un anneau interne (222) relié à l'anneau externe (221) par des bras rayonnants (223) et prévu pour transmettre à la partie inférieure de l'élément souple (50, 150) les poussées des animaux contre les bords du récipient (20, 120).

20. Dispositif d'alimentation selon une des revendications précédentes, **caractérisé en ce qu'**il est pourvu de moyens pour immobiliser l'assiette (10,110) par rapport au récipient (20, 120).

21. Dispositif d'alimentation selon la revendication 20, **caractérisé en ce que** lesdits moyens d'immobilisation sont constitués d'au moins une targette (160) dont le pêne (161) peut pénétrer dans des trous (127c) percés dans la paroi solidaire du récipient (20, 120).

22. Dispositif d'alimentation pour animaux selon la revendication 1, **caractérisé en ce qu'**il comporte une pluralité de récipients superposés (20, 120...), chacun desdits récipients (20, 120...) étant ouvert dans sa partie supérieure de manière à permettre auxdits animaux de prendre de l'aliment dans ledit récipient, des moyens pour mettre, à volonté, en communication ledit tube convoyeur (60) avec l'intérieur de chacun desdits récipients (20, 120...) et avec l'intérieur de ladite assiette (10, 110), lesdits récipients (20, 120...) et ladite assiette (10, 110) comportant des moyens de réglage de la hauteur d'aliment qu'ils contiennent de manière à fonctionner à la manière d'une mangeoire.

## Claims

1. Feeding device for animals, such as poultry, which is capable of being suspended on a feed conveyor tube (60) and which comprises, on the one hand, a trough which is constituted by a plate (10, 110) and, on the other hand, a receptacle (20, 120) which is in communication with the plate (10, 110),
the receptacle (20, 120) being superimposed on the plate (10, 110) and open in the lower portion (25, 123) thereof so that the food distributed inside the receptacle (20, 120) from the conveyor (60) can be dispensed into the plate (10, 110), **characterised in that** the receptacle (20, 120) is open in the upper portion thereof and is widened so that it forms a trough, the device thus being constituted by two superimposed troughs (10, 110; 20, 120).

2. Device according to claim 1, **characterised in that** it comprises means for selectively interrupting the dispensing of the food from the inner side of the upper trough (20, 120) into the plate (10, 110).

3. Device according to either claim 1 or claim 2, wherein the plate (10, 110) and the receptacle (20, 120) which form lower and upper troughs are provided so as to be able to be moved axially relative to each other,
**characterised in that** the food is dispensed into the plate from the receptacle through an aperture which is defined between the lower edge (25, 123) of the receptacle (20, 120) and the base of the plate (10, 110),
and **in that** the plate (10, 110) and the receptacle (20, 120) are provided so as to be able to assume all the positions included between a position called the opening and a position called the closure, the inner side of the receptacle (20, 120) being in communication with the inner side of the plate (10, 110) at locations where the food is distributed in all positions with the exception of the position called the closure in which the base (25) of the receptacle (20, 120) is obstructed by the base (11, 111) of the plate (10, 110).

4. Feeding device for animals according to claim 1, **characterised in that** the receptacle (20, 120) is provided at its base (25, 124) with an aperture (124a) which may as desired be either open at the base (11, 111) of the plate (10, 110) or obstructed by the base (11, 111), the plate (10, 110) therefore acting as a trough.

5. Feeding device for animals according to claim 1 or claim 2, **characterised in that** it further comprises means for adjusting the depth of food in the receptacle (120), the receptacle (120) acting as a trough.

6. Feeding device for animals according to claim 5, **characterised in that** the adjustment means comprise, on the one hand, a hollow central portion (122) which is provided with a base (125) and whose upper opening is intended to be placed in communication with the conveyor tube (60), on which the feeding device is intended to be suspended, the lateral wall (122a) of the central portion (122) being perforated by at least one opening (122b) which opens to the inside of the receptacle (120) and, on the other hand, an adjustment member (200) which is in the form of a sleeve which covers, with play, the central portion (122) of the receptacle (120), the adjustment member (200) being able to be adjusted in terms of height relative to the base (123, 124) of the receptacle (120).

7. Feeding device according to any one of the preceding claims, **characterised in that** it comprises a pliable flexible element (50, 150) which is provided to ensure the suspension of the device.

8. Feeding device according to claim 6, **characterised in that** it comprises a pliable and flexible pipe (150) which is provided to connect the upper opening of the central portion (122) to the conveyor tube (60), on which the feeding device is intended to be suspended.

9. Feeding device according to claim 8, **characterised in that** the flexible pipe (150) has its lower end provided so as to be mounted on a hollow support (130) which surrounds the conveyor tube (60), on which the feeding device is intended to be suspended and which is open in its upper portion thereof, the support (130) being constituted by two half-shells (131 and 132) which can pivot relative to each other along an axis substantially parallel with the axis of the conveyor tube (60), the flexible pipe (150) being fitted in a portion which is formed by the half-shells (131 and 132) and which is located below the pivot axis (133).

10. Feeding device according to claim 7, **characterised in that** the suspension element (50) is engaged via the lower end thereof with the plate (10, 110) or the receptacle (20, 120).

11. Feeding device according to claim 10, **characterised in that** the flexible suspension element comprises a helical portion (52).

12. Feeding device according to claim 10 or claim 11, **characterised in that** the suspension element (50) extends inside a tube (40) whose lower end is fixed in the base (11) of the plate (10) and whose upper portion is connected to the wall (21) of the receptacle (20) by means of a nut (22), which nut (22) is screwed onto the threaded portion of the tube (40) and in this manner constitutes a connection between the tube (40) and the wall (21).

13. Feeding device according to claim 12, **characterised in that** the tube (40) is threaded, the receptacle (20) comprising in its axis a nut (22) which is connected to the wall (21) of the receptacle (20) and which is provided to be screwed to the threaded portion of the tube (40) in order to be able to axially move the receptacle (20) relative to the plate (10).

14. Feeding device according to any one of claims 10 to 13, **characterised in that** it comprises a support (30) which is provided to be fixed to the conveyor tube (60), to which the suspension element (50) is intended to be connected, the upper portion of the suspension element (50) being bent so as to be inclined relative to the vertical and resting, on the one hand, on a first surface which is constituted by a pin (34) and which is located inside a bent portion (54) and, on the other hand, on a second surface which is constituted by the base (32c) of the slot (32b) and which is located at the end thereof beyond the bent portion (54) and at the outer side of the bent portion (54).

15. Feeding device according to claim 14, **characterised in that** the end of the upper portion of the suspension element (50) comprises a hook-like portion which is provided so as to be accommodated in a housing (32d) of the support (30).

16. Feeding device according to any one of the preceding claims, **characterised in that** it is provided with a conical cover (90, 190).

17. Feeding device according to any one of the preceding claims, **characterised in that** the plate (10, 110) and the receptacle (20, 120) are such that the wall (21, 121) of the receptacle (20, 120) is sufficiently close to the periphery (12, 112) of the plate (10, 110) for it to constitute an obstacle which prevents a chicken from remaining in the plate (10, 110) and contaminating the food.

18. Feeding device according to any one of the preceding claims, **characterised in that** the upper edge of the receptacle (20, 120) is provided so as to receive an extension piece (210), the lateral wall of which extends that of the receptacle (20, 120).

19. Feeding device according to any one of the preceding claims, **characterised in that** it comprises a strengthening member (220) whose external ring (221) is fixed to the upper edge of the receptacle (20, 120), the strengthening member (220) further comprising an internal ring (222) which is connected to the external ring (221) via radiating arms (223) and which is provided so as to transmit to the lower portion of the flexible element (50, 150) the pushing forces of the animals against the edges of the receptacle (20, 120).

20. Feeding device according to any one of the preceding claims, **characterised in that** it is provided with means for fixing the plate (10, 110) in position relative to the receptacle (20, 120).

21. Feeding device according to claim 20, **characterised in that** the fixing means are constituted by at least one sash bolt (160), the sliding bolt (161) of which can be introduced into holes (127c) which are formed in the wall which is fixedly joined to the receptacle (20, 120).

22. Feeding device for animals according to claim 1, **characterised in that** it comprises a plurality of superimposed receptacles (20, 120...), each of the receptacles (20, 120...) being open in the upper portion thereof so as to allow the animals to take food from the receptacle, means for placing the conveyor tube (60) in communication with the inner side of each of these receptacles (20, 120...) and with the inner side of the plate (10, 110) as desired, the receptacles (20, 120...) and the plate (10, 110) comprising means for adjusting the depth of food which they contain in order to act as a trough.

## Patentansprüche

1. Vorrichtung zur Fütterung von Tieren, wie etwa Geflügel, die an einem Futterförderrohr (60) aufgehängt zu werden vermag und die einerseits einen von einem Teller (10, 110) gebildeten Futtertrog und andererseits einen mit dem Teller (10, 110) in Verbindung stehenden Behälter (20, 120) umfasst,
wobei der Behälter (20, 120) über dem Teller (10, 110) angeordnet und in seinem unteren Teil (25, 123) offen ist, so dass das aus dem Förderrohr (60) in den Innenraum des Behälters (20, 120) abgegebene Futter in den Teller (10, 110) entleert werden kann,
**dadurch gekennzeichnet, dass** der Behälter (20, 120) in seinem oberen Teil offen und konisch erweitert ist, so dass er einen Futtertrog bildet, wobei die Vorrichtung demnach von zwei übereinanderliegenden Futtertrögen (10, 110; 20, 120) gebildet ist.

2. Vorrichtung nach Anspruch 1,
**dadurch gekennzeichnet, dass** sie Mittel umfasst, um das Entleeren des Futters aus dem Innenraum des oberen Futtertrogs (20, 120) in den Teller (10, 110) selektiv zu unterbrechen.

3. Vorrichtung nach einem der Ansprüche 1 oder 2, bei der der Teller (10, 110) und der Behälter (20, 120), die den unteren bzw. den oberen Futtertrog bilden, dazu bestimmt sind, bezüglich einander axial verschoben werden zu können,
**dadurch gekennzeichnet, dass** das Futter aus dem Behälter durch ein zwischen dem unteren Rand (25, 123) des Behälters (20, 120) und dem Boden des Tellers (10, 110) ausgebildetes Fenster in den Teller entleert wird,
und dass der Teller (10, 110) und der Behälter (20, 120) dazu bestimmt sind, alle zwischen einer so genannten Offenstellung und einer so genannten Schließstellung liegenden Stellungen einnehmen zu können, wobei der Innenraum des Behälters (20, 120) mit dem Innenraum des Tellers (10, 110) dort, wo das Futter abgegeben wird, in allen Stellungen in Verbindung steht, mit Ausnahme der so genannten Schließstellung, in der der Boden (25) des Behälters (20, 120) durch den Boden (11, 111) des Tellers (10, 110) verschlossen ist.

4. Vorrichtung zur Fütterung von Tieren nach Anspruch 1,
**dadurch gekennzeichnet, dass** der Behälter (20, 120) in seinem Boden (25, 124) mit einem Schlitz (124a) versehen ist, der nach Belieben entweder zum Boden (11, 111) des Tellers (10, 110) geöffnet oder durch den Boden (11, 111) verschlossen werden kann, wobei der Teller (10, 110) dann als Futtertrog dient.

5. Vorrichtung zur Fütterung von Tieren nach Anspruch 1 oder 2,
**dadurch gekennzeichnet, dass** sie ferner Mittel zum Einstellen der Futterstandshöhe im Behälter (120) umfasst, wobei der Behälter (120) dann als Futtertrog dient.

6. Vorrichtung zur Fütterung von Tieren nach Anspruch 5,
**dadurch gekennzeichnet, dass** die Einstellmittel einerseits aus einem hohlen Mittelteil (122) bestehen, das mit einem Boden (125) versehen ist und dessen obere Öffnung dazu bestimmt ist, mit dem Förderrohr (60), an dem die Fütterungsvorrichtung aufgehängt werden soll, in Verbindung gebracht zu werden, wobei die Seitenwand (122a) des Mittelteils (122) mit wenigstens einer in den Innenraum des Behälters (120) mündenden Öffnung (122b) durchbrochen ist, und andererseits aus einem Stellorgan (200), das die Form einer Hülse aufweist, die mit Spiel über das Mittelteil (122) des Behälters (120) gestülpt ist, wobei das Stellorgan (200) bezüglich des Bodens (123, 124) des Behälters (120) in der Höhe verstellbar ist.

7. Fütterungsvorrichtung nach einem der vorhergehenden Ansprüche,
**dadurch gekennzeichnet, dass** sie ein elastisches, biegsames Element (50, 150) aufweist, das vorgesehen ist um die Aufhängung der Vorrichtung sicherzustellen.

8. Fütterungsvorrichtung nach Anspruch 6,
**dadurch gekennzeichnet, dass** sie ein elastisches, biegsames Rohr (150) aufweist, das zum Verbinden der oberen Öffnung des Mittelteils (122) mit dem Förderrohr (60) vorgesehen ist, an dem die Fütterungsvorrichtung aufgehängt werden soll.

9. Fütterungsvorrichtung nach Anspruch 8,
**dadurch gekennzeichnet, dass** das biegsame Rohr (150) mit seinem unteren Ende zur Anbringung an einer hohlen Halterung (130) vorgesehen ist, die das Förderrohr (60), an dem die Fütterungsvorrichtung aufgehängt werden soll, umschließt und die in ihrem oberen Teil offen ist, wobei die Halterung (130) von zwei Schalenhälften (131 und 132) gebildet ist, die bezüglich einander längs einer zur Achse des Förderrohrs (60) im Wesentlichen parallelen Achse verschwenkt werden können, wobei das biegsame Rohr (150) in ein durch die Schalenhälften (131 und 132) gebildetes Teil gesteckt ist, das sich unter der Drehachse (133) befindet.

10. Fütterungsvorrichtung nach Anspruch 7,
**dadurch gekennzeichnet, dass** das Aufhängeelement (50) mit seinem unteren Ende an dem Teller (10, 110) oder dem Behälter (20, 120) eingehängt ist.

11. Fütterungsvorrichtung nach Anspruch 10,
**dadurch gekennzeichnet, dass** das elastische Aufhängeelement ein spiralförmiges Teil (52) aufweist.

12. Fütterungsvorrichtung nach Anspruch 10 oder 11,
**dadurch gekennzeichnet, dass** das Aufhängeelement (50) innen in einem Rohr (40) verläuft, dessen unteres Ende am Boden (11) des Tellers (10) befestigt ist und dessen oberes Teil mit der Wand (21) des Behälters (20) über eine Mutter (22) verbunden ist, wobei die Mutter (22) auf das Gewindeteil des Rohrs (40) geschraubt ist und somit eine Verbindung zwischen dem Rohr (40) und der Wand (21) bildet.

13. Fütterungsvorrichtung nach Anspruch 12,
**dadurch gekennzeichnet, dass** das Rohr (40) mit einem Gewinde versehen ist, wobei der Behälter (20) in seiner Achse eine Mutter (22) aufweist, die mit der Wand (21) des Behälters (20) verbunden ist und die dazu bestimmt ist, auf das Gewindeteil des Rohrs (40) geschraubt zu werden, um den Behälter (20) bezüglich des Tellers (10) axial verschieben zu können.

14. Fütterungsvorrichtung nach einem der Ansprüche 10 bis 13,
**dadurch gekennzeichnet, dass** sie eine Halterung (30) umfasst, die zur Befestigung an dem Förderrohr (60), mit dem das Aufhängeelement (50) verbunden werden soll, bestimmt ist, wobei der oberen Teil des Aufhängeelements (50) derart gebogen ist, dass es bezüglich der Senkrechten schräg verläuft, und einerseits auf einer ersten Fläche aufliegt, die von einem Stift (34) gebildet ist und die sich innen in einer Biegung (54) befindet, und anderseits auf einer zweiten Fläche, die vom Boden (32c) des Schlitzes (32b) gebildet ist und die sich an ihrem Ende auf der anderen Seite der Biegung (54) und außerhalb der Biegung (54) befindet.

15. Fütterungsvorrichtung nach Anspruch 14,
**dadurch gekennzeichnet, dass** das Ende des oberen Teils des Aufhängeelements (50) ein hakenförmiges Teil aufweist, das zur Lagerung in einer Aufnahme (32d) der Halterung (30) bestimmt ist.

16. Fütterungsvorrichtung nach einem der vorhergehenden Ansprüche,
**dadurch gekennzeichnet, dass** sie mit einer kegelförmigen Abdeckung (90, 190) versehen ist.

17. Fütterungsvorrichtung nach einem der vorhergehenden Ansprüche,
**dadurch gekennzeichnet, dass** der Teller (10, 110) und der Behälter (20, 120) so ausgeführt sind, dass die Wand (21, 121) des Behälters (20, 120) nahe genug beim Rand (12, 112) des Tellers (10, 110) liegt, damit sie ein Hindernis bildet, das die Küken daran hindert, sich im Teller (10, 110) aufzuhalten und das Futter zu verschmutzen.

18. Fütterungsvorrichtung nach einem der vorhergehenden Ansprüche,
**dadurch gekennzeichnet, dass** der obere Rand des Behälters (20, 120) zur Aufnahme einer Verlängerung (210) bestimmt ist, deren Seitenwand die des Behälters (20, 120) verlängert.

19. Fütterungsvorrichtung nach einem der vorhergehenden Ansprüche,
**dadurch gekennzeichnet, dass** sie eine Versteifungsrippe (220) aufweist, deren äußerer Ring (221) am oberen Rand des Behälters (20, 120) befestigt ist, wobei die Versteifungsrippe (220) zudem einen inneren Ring (222) aufweist, der mit dem äußeren Ring (221) durch sternförmig verlaufende Arme (223) verbunden und dazu vorgesehen ist, die Stöße der Tiere gegen die Ränder des Behälters (20, 120) an den unteren Teil des biegsamen Elements (50, 150) zu übertragen.

20. Fütterungsvorrichtung nach einem der vorhergehenden Ansprüche,
**dadurch gekennzeichnet, dass** sie mit Mitteln zum Arretieren des Tellers (10, 110) in Bezug auf den Behälter (20, 120) versehen ist.

21. Fütterungsvorrichtung nach Anspruch 20,
**dadurch gekennzeichnet, dass** die Arretiermittel von wenigstens einem Riegel (160) gebildet sind, dessen Falle (161) in Löcher (127c) eindringen kann, die in die mit dem Behälter (20, 120) fest verbundene Wand gebohrt sind.

22. Vorrichtung zur Fütterung von Tieren nach Anspruch 1,
**dadurch gekennzeichnet, dass** sie eine Vielzahl von übereinanderliegenden Behältern (20, 120...) umfasst, wobei jeder Behälter (20, 120...) in seinem oberen Teil offen ist, um den Tieren die Entnahme des Futters aus dem Behälter zu ermöglichen, sowie Mittel, um das Förderrohr (60) nach Belieben mit dem Innenraum eines jeden Behälters (20, 120...) und mit dem Innenraum des Tellers (10, 110) zu verbinden, wobei die Behälter (20, 120...) und der Teller (10, 110) Mittel zum Einstellen der Höhe des darin enthaltenen Futters umfassen, um als Futtertrog zu dienen.
